# DEMANDE DE BREVET EUROPEEN

(11) **EP 0 612 789 A1**
(43) Date de publication de la demande: **31.08.1994**
(21) Numéro de dépôt: 94200382.3
(22) Date de dépôt: 14.02.1994
(51) Int. Cl.: C08J 5/18, C08B 37/14, C08L 5/14

(54) **Procédé de fabrication de films souples, solides, biodégradables, et produits obtenus**

(30) Priorité: 26.02.1993 FR 9302532
(71) Demandeur: SORGHO AGRO-INDUSTRIEL ET PAPETIER S.A.I.S. Société Anonyme, F-75008 Paris (FR)
(72) Inventeur: Gaset, Antoine, F-31000 Toulouse (FR); Jamet, Jean-Paul, F-75012 paris (FR); Manolas, Christos, F-31400 Toulouse (FR); Qiabi, Abdelmalek, F-31200 Toulouse (FR); Rigal, Luc, F-31240 Saint Jean (FR); Vilarem, Gérard, F-31130 Balma (FR)
(74) Mandataire: Barre, Philippe

(57) **Abrégé**

L'invention concerne un procédé de fabrication de films souples, solides, biodégradables, utilisables en particulier pour réaliser des conditionnements ou emballages ou la protection de surfaces ou de produits. Le procédé consiste à utiliser une matière végétale contenant de la moelle telle que sorgho, kénaf, rafle de maïs, à en extraire les hémicelluloses, en particulier hémicelluloses B, à solubiliser celles-ci, à étaler la solution sur une surface en vue de former une couche liquide et à réaliser un séchage de ladite couche en vue de former le film solide. Celui-ci se caractérise par un taux d'hydratation interne compris entre 10 % et 25 %, une solubilité à l'eau supérieure à 200 g/l et une résistance mécanique à la traction comprise entre 15 et 40 MPa.

## Description

L'invention concerne un procédé de fabrication de films souples, solides, biodégradables. Elle s'étend aux produits obtenus. Par "film", on entend une couche d'épaisseur contrôlée plus faible que les autres dimensions ; par "filmogène", on entend par la suite la qualité d'un matériau apte à former un film souple, solide, ayant une bonne tenue mécanique (en particulier rendant ledit film manipulable sans risque de désagrégation).

Les contraintes d'environnement tendent à limiter l'emploi de conditionnements non dégradables et à leur substituer des produits à cycle court de décomposition. On sait actuellement réaliser des films biodégradables, c'est-à-dire destructibles naturellement dans de courts délais (inférieurs à une saison) sans laisser de résidus polluants ou toxiques.

Un premier type de procédé pour réaliser des films biodégradables destinés à la fabrication de conditionnements consiste à copolymériser des dérivés d'acide polyhydroxylé (acide lactique, acide valérique...) ; toutefois, ces procédés sont très onéreux en raison de la nature de la matière première utilisée et du coût de la transformation, ce qui en limite considérablement les applications.

Par ailleurs, une voie de recherche a été récemment développée pour tenter de fabriquer des films biodégradables à partir d'extraits de matière végétale. En effet, ces matières issues de plantes annuelles sont par nature biodégradables et sont généralement bon marché. Les publications suivantes font état de travaux sur ce sujet : Aristippos Gennadios and Curtis L. Weller, "Edible films and coating from wheat and corn proteins", Food Tech. Oct. 90, p. 63-67 ; brevet US 4.843.655 ; brevet US 3.832.313 ; Robert Coleman "Biodegradable plastics from potato waste double savings to environment" Agricult. Eng. Nov. 90, p. 20-22 ; Werner Wiedmann et Edgar Strobel, "Compounding of thermoplastic starch with twin-screw extruders" Starch 43 N° 4 S p. 138-145. Ces procédés utilisent soit des protéines, soit de l'amidon, soit des mélanges (gluten) qui sont extraits de matières végétales (blé, maïs, pommes de terre) pour former la base du film ; toutefois, ces matières ne possèdent pas par elles-mêmes des propriétés filmogènes permettant de réaliser un film qui soit souple et résistant : les études ont montré que, utilisées seules, elles conduisent à une couche qui durcit et devient cassante. Aussi les travaux précités prévoientils d'ajouter à ces matières premières des produits plastifiants (dérivés du pétrole, glycérine...) et de soumettre les mélanges à des traitements thermomécaniques qui développent des réactions de combinaison entre plastifiant et matière de base, conduisant à une organisation structurale filmogène. Les formulations précises protéine et/ou amidon/plastifiant et les caractéristiques des traitements dépendent des auteurs et paraissent fournir des films qui présentent des qualités de souplesse et de résistance satisfaisants ; toutefois, ces procédés sont chers en raison des coûts des plastifiants et des traitements nécessaires ; de plus et surtout, le film obtenu n'est pas totalement biodégradable en cycle court puisqu'il contient une fraction plus difficilement biodégradable.

Ainsi, dans ces procédés, les polysaccharides ou protéines utilisés jusqu'à présent on pour seule fonction de former la base du film et ont été simplement choisis en raison de leur caractère biodégradable et de leur faible coût : la fonction plastifiante qui permet de former un film souple et résistant est apportée par d'autres moyens (addition de tiers corps et traitements).

Par ailleurs certains produits actifs, en particulier dans le domaine pharmaceutique, sont enrobés dans des films d'encapsulation biodégradables qui sont appelés à se décomposer dans l'organisme pour libérer le principe actif ; actuellement le matériau utilisé pour réaliser ces encapsulations est généralement une gélatine d'origine animale qui est le seul produit naturel disponible réunissant les propriétés nécessaires : totale biodégradabilité, absence de toxicité résiduelle, caractère filmogène. Toutefois, la tenue mécanique des films fabriqués au moyen de gélatine est réduite et, si elle permet de réaliser des conditionnements du type capsule (faibles dimensions), elle est totalement insuffisante pour la fabrication d'emballages ou autres conditionnements de surfaces plus importantes. En outre, la stérilisation de ce type de produit d'origine animale est délicate et onéreuse.

La présente invention se propose de fournir un nouveau procédé de fabrication de films aptes en particulier à permettre la réalisation de conditionnements, emballages, ou à assurer la protection de surfaces ou produits. L'objectif de l'invention est de fabriquer des films souples, solides, biodégradables, bénéficiant de propriétés de résistance mécanique adaptées pour réaliser aussi bien des encapsulations que des conditionnements, emballages ou protection de plus grande surface.

Un autre objectif de l'invention est de permettre cette fabrication à un coût très réduit sans adjonction de plastifiant. De tels plastifiants, non nécessaires à la formation du film dans le procédé de l'invention, peuvent le cas échéant être ajoutés pour modifier les propriétés du film, en particulier pour en augmenter la plasticité dans certaines applications.

Le procédé conforme à l'invention pour fabriquer un film souple, solide, biodégradable, se caractérise en ce que (a) on utilise une matière première végétale contenant de la moelle obtenue à partir d'une plante à moelle, (b) on met ladite matière première végétale en présence d'une solution basique de façon à en solubiliser les hémicelluloses, (c) on sépare la phase liquide de la phase solide, (d) on traite ladite phase liquide de façon à précipiter les hémicelluloses, (e) on extrait le précipité cristallisé obtenu, (f) on solubilise à chaud ledit précipité, (g) on étale la solution obtenue sur une surface en vue de former une couche liquide, et (h) on réalise un séchage de ladite couche en vue de former le film solide.

L'invention se fonde sur la mise en évidence d'une propriété remarquable et inconnue des hémicelluloses issues de la moelle de plantes, à savoir celle de former un film solide, souple et résistant, et ce, sans nécessité d'un additif ou de traitement après extraction. Le procédé de l'invention permet donc de réaliser un film très bon marché, sans additif ; bien entendu, pour certaines applications, il demeure possible d'ajouter le cas échéant tel ou tel additif pour augmenter la résistance mécanique du film ou modifier ses propriétés, notamment certaines propriétés mécaniques.

Il est à noter que, de façon inexpliquée à ce jour, les plantes n'ayant pas de moelle (blé, orge...) ou les parties démoellées des autres plantes (tige externe, bois des rafles, pailles...) ne permettent pas d'obtenir un tel film : les gels formés à partir des extraits hémicellulosiques de ces plantes ou parties de plantes se déshydratent en craquelant et conduisent à une couche sans aucune tenue propre.

On peut utiliser comme matière première végétale la moelle seule après extraction de la plante et élimination des fibres ligno-cellulosiques externes. En particulier la moelle extraite du sorgho, du kénaf ou des rafles de maïs, donne de bons résultats et conduit à des films biodégradables de très bonne résistance.

Il est également possible d'utiliser les tiges entières de sorgho et de kénaf contenant la moelle, ou les rafles entières de maïs, hors grains, contenant la moelle. Les expérimentations ont montré que l'on obtenait alors des propriétés filmogènes moins bonnes que dans le cas précédent, mais parfaitement satisfaisantes pour conduire à des films de bonne résistance.

Il est à noter que les procédés d'extraction des hémicelluloses des plantes ont déjà fait l'objet de nombreux travaux pour en optimiser les paramètres. Ainsi par exemple, les publications suivantes décrivent des procédés d'extraction et de fractionnement des hémicelluloses de type A et B de plantes annuelles : G.R. Woolard et al., "Note on the isolation of sorghum husk polysaccharides and fractionation of hemicellulose B", Am. Ass. Cereal Ch. 1976, p. 601-608 ; R.L. Cunningham et al., "Hemicellulose isolation from annual plants", Biotech. and bioengin. Symp. N° 17, 1986, p. 159-168 ; brevet US 2.868.778. Toutefois, ces publications d'intérêt général ne fournissent aucun enseignement particulier pour réaliser des films souples puisqu'elles ne décrivent ni ne suggèrent les qualités filmogènes remarquables des hémicelluloses issues de la moelle végétale ni, a fortiori, la propriété qu'ont celles-ci de former un film en l'absence de tout additif ou traitement thermomécanique.

De préférence, l'extraction des hémicelluloses est réalisée dans le procédé de l'invention dans les conditions suivantes :
- on met la matière première végétale en présence d'une solution de soude ou potasse, de concentration pondérale comprise entre 1 % et 10 %,
- la matière première végétale est mélangée à la solution basique dans un rapport pondéral solide/liquide au moins égal à 0,04,
- la solution contenant la matière végétale est chauffée, sous agitation, à une température comprise entre 40° C et 80° C.

Par ailleurs, les travaux des inventeurs ont mis en évidence que c'était plus particulièrement les hémicelluloses de type B extraites de la moelle des plantes précitées qui possédaient des propriétés filmogènes très affirmées. Il est possible de fabriquer des films en utilisant le mélange des hémicelluloses A et hémicelluloses B extraites ; toutefois, selon un mode de mise en oeuvre avantageux du procédé conduisant à des films de cohésion et résistance accrues, les hémicelluloses de type A sont d'abord précipitées sélectivement et séparées, la phase liquide restante étant ensuite traitée pour précipiter les hémicelluloses B qui serviront seules à former le film après séparation et solubilisation. Les hémicelluloses A qui sont ainsi séparées ont des propriétés rhéologiques qui les rendent aptes à être utilisées comme additif technologique ou alimentaire (augmentation de la viscosité d'une formulation) ; une fraction de ces hémicelluloses A peut le cas échéant être rajoutée au film avant séchage pour en augmenter la viscosité.

La précipitation sélective des hémicelluloses A peut être effectuée par une addition acide jusqu'à un pH compris entre 5 et 7 tandis que, après séparation de celles-ci, la précipitation des hémicelluloses B sera effectuée en ajoutant à la phase liquide un alcool en quantité au moins égale à 20 g d'alcool par gramme d'hémicellulose B contenue dans la solution. Au préalable, il est avantageux de réaliser une concentration de la phase liquide par évaporation de façon à éliminer entre 30 % et 60 % d'eau.

Le précipité cristallisé d'hémicellulose peut être solubilisé à chaud en milieu aqueux à une température comprise entre 40° et 95° C, dans un rapport solide/liquide au moins égal à 100 g/l sans atteindre la saturation du milieu.

Après étalement le séchage de la couche liquide est effectué par tout moyen classique : étuvage à faible température (30° - 50° C), séchage sous courant d'air chaud, séchage naturel. Ce séchage élimine l'eau de solubilisation et conduit à la formation d'un film souple ayant un taux d'hydratation interne sensiblement compris entre 10 % et 25 % (taux mesuré par balance infrarouge "Mettler").

L'invention s'étend aux films souples, solides, biodégradables à base d'hémicellulose, réalisés par le procédé précédemment défini ; ces films se caractérisent par :
. un taux d'hydratation interne compris entre 10 % et 25 %,
. une solubilité a l'eau supérieure à 200 g/l,
. une résistance mécanique à la traction comprise entre 15 et 40 mégapascal.

L'invention s'étend également à un produit filmogène permettant la fabrication d'un film souple, solide, biodégradable, caractérisé en ce qu'il est majoritairement constitué par des hémicelluloses issues de moelle de sorgho, de kénaf ou de rafles de maïs.

Ce produit filmogène est obtenu en réalisant l'extraction hémicellulosique précitée, en séchant le précipité cristallisé, puis en le conditionnant en vue de son transport. Il suffira au fabricant de film de solubiliser ce produit comme défini ci-dessus pour réaliser le film désiré. Bien entendu, compte tenu de la simplicité des opérations du procédé de l'invention, le fabricant de film peut également mettre en oeuvre directement ce procédé à partir des matières végétales contenant de la moelle sans passer par l'étape de séchage et de conditionnement du précipité cristallisé obtenu à l'issue de l'extraction hémicellulosique.

Les exemples qui suivent illustrent le procédé de l'invention et les caractéristiques des films obtenus.

### EXEMPLE 1

Dans cet exemple, la matière première végétale utilisée est de la moelle de sorgho seule, obtenue par démoellage manuel à partir de tiges de sorgho fibre (variété sorgho balai, genre bicolore).

Le procédé utilisé pour extraire les hémicelluloses de cette moelle de sorgho met en jeu une extraction aqueuse (température : 60° C), puis une extraction à la soude (température : 60° C).

50 g de moelle de sorgho sont broyés mécaniquement (taille moyenne des particules : 0,5 mm) et sont introduits dans un réacteur contenant 1,5 litre d'eau, en vue d'opérer un lavage préalable afin d'éliminer les impuretés hydrosolubles. L'ensemble est maintenu sous agitation à la température de 60° C pendant une heure et demi. A la fin de cette étape préalable de lavage, une filtration et un rinçage à l'eau sont effectués. La moelle est alors récupérée et le filtrat écarté.

La moelle ainsi lavée est introduite dans un réacteur contenant un litre de solution basique de NaOH de concentration pondérale égale à 4 %. L'ensemble est maintenu sous agitation à la température de 60° C pendant 90 minutes.

A l'issue de cette étape de solubilisation basique des hémicelluloses, la solution est filtrée sur support filtrant ; le filtrat est récupéré et le gâteau de matière ligno-cellulosique est écarté. Le filtrat est ensuite concentré sous pression réduite (0,2 bar) avec élimination de 50 % d'eau. La solution concentrée est alors acidifiée jusqu'à un pH égal à 6 avec de l'acide acétique ; la solution est laissée au repos une heure. Les hémicelluloses A qui précipitent (4 g) sont éliminées par filtration sur support filtrant.

La précipitation des hémicelluloses B contenues dans le filtrat est ensuite effectuée par addition d'éthanol à 95 % à température ambiante (un volume pour un volume, soit 66 g d'alcool par gramme d'hémicellulose B précipitée). Le précipité cristallisé d'hémicellulose B est alors filtré, lavé à l'éthanol, puis séché à l'air libre.

L'on obtient 9 g d'une fine poudre blanche qui a été caractérisée par microanalyse élémentaire, dosage des acides uroniques, hydrolyse acide ménagée et chromatographie liquide haute performance. Ces analyses et l'étude structurale ont conduit à une structure d'hémicellulose B de type arabino-glucurono-xylanique substitué avec des restes de glucose, galactose et mannose ; la chaîne principale est xylanique et les principaux substituants sont l'arabinose en 1-2 et le 4-0-méthylglucuronique en 1-3.

Pour réaliser un film à partir de cette poudre, celle-ci est mélangée à de l'eau à raison de 1 gramme de poudre pour 5 ml d'eau. Le milieu est chauffé sous agitation jusqu'à dissolution pendant 10 minutes à une température de 80° C. Après dissolution, le liquide est étalé par coulage naturel sur une surface de verre et séché à l'étuve à 40° C pendant deux heures. On obtient un film solide, souple, transparent, qui peut être manipulé à sec sans précaution particulière. Ce film se caractérise par :
. une épaisseur de 0,02 millimètre,
. un taux d'hydratation interne de 17 % (balance de "Mettler"),
. une résistance à la traction de 37 MPa,
. une solubilité à l'eau supérieure à 200 g/l.

Ces caractéristiques permettent de réaliser avec un tel film des emballages de protection de denrées périssables, des pelliculages de graines, des couches de protection de surfaces diverses (couche protectrice provisoire...) qui s'éliminent par simple lavage à l'eau sans engendrer de résidus polluants.

### EXEMPLE 2

Cet exemple est mis en oeuvre d'une façon analogue à l'exemple 1, à l'exception de l'étape de filtration des hémicelluloses A qui est supprimée, afin de conserver ces hémicelluloses A dans la solution. L'acidification, l'ajout d'éthanol... sont réalisés dans les mêmes conditions.

L'on obtient 13 g d'une fine poudre légèrement grise qui a été caractérisée comme précédemment et qui est un mélange des hémicelluloses B de l'exemple 1 et d'hémicelluloses A dont la structure est de type analogue, mais avec un degré de substitution moindre en arabinose et en acide uronique.

Le film obtenu à partir de cette poudre est transparent avec une légère coloration marron-gris et se caractérise par :
. une épaisseur de 0,04 millimètre,
. un taux d'hydradation interne de 20 %,
. une résistance mécanique à la traction de 15 MPa,
. une solubilité à l'eau supérieure à 200 g/l.

Ce film peut notamment être utilisé pour couvrir des surfaces de produits (produits pharmaceutiques...) en vue de les conditionner.

### EXEMPLE 3

Cet exemple est mis en oeuvre de façon identique à l'exemple 1, mais à partir d une matière végétale constituée par les tiges entières de sorgho contenant la moelle (20 % en poids de moelle, 80 % de fibres externes).

Dans cet exemple, 150 g de matière végétale ont été traités comme à l'exemple 1. L'on obtient 40 g de fine poudre jaune/marron qui a été caractérisée comme précédemment. La différence avec l'exemple 1 réside dans une proportion plus importante d'arabinose et de 4-0-méthylgluronique.

Le film obtenu est translucide et coloré en marron. Il se caractérise par :
. une épaisseur de 0,03 millimètre,
. un taux d'hydratation interne de 18 %,
. une résistance mécanique à la traction de 25 MPa,
. une solubilité à l'eau supérieure à 200 g/l.

### EXEMPLE 4

Dans cet exemple, la matière première végétale utilisée est la rafle entière de maïs, hors grains.

Le procédé utilisé pour extraire les hémicelluloses de la rafle, met en jeu une extraction à la soude (température : 60° C). 100 g de rafles de maïs sont broyés mécaniquement (taille moyenne des particules : 1 mm) et sont introduits dans un réacteur contenant un litre de solution basique de NaOH de concentration pondérale égale à 5 %. L'ensemble est maintenu sous agitation à la température.

L'acidification et l'ajout d'éthanol sont réalisés de façon analogue à l'exemple 1.

L'on obtient 37,21 g d'hémicellulose A et 13,17 g d'hémicellulose B, sous forme de poudre marron.

La différence de traitement avec l'exemple 1 réside dans l'absence d'étape de lavage à l'eau préalablement à l'extraction basique.

Le film obtenu à partir des hémicelluloses B est transparent avec une coloration marron et se caractérise par :
- une épaisseur de 0,05 mm,
- un taux d'hydradation interne de 16 %,
- une solubilité à l'eau supérieure à 200 g/l,
- une résistance mécanique à la traction de 31 MPa.

### EXEMPLE 5

Dans cet exemple, la matière première végétale utilisée est la moelle de kénaf seule, obtenue par démoellage mécanique de tiges de kénaf.

Le protocole de mise en oeuvre est le même qu'à l'exemple 1. Il conduit à un film transparent non coloré caractérisé par : une épaisseur de 0,04 mm, un taux d'hydradation interne de 18 %, et une solubilité à l'eau supérieure à 200 g/l.

La résistance mécanique à la traction était plus faible que dans les exemples précédents, mais suffisante pour permettre l'utilisation de ce film comme protecteur de surfaces solides, par exemple enrobage de graines. Il est à noter que les paramètres de mise en oeuvre de cet exemple n'ont pas été optimisés en vue de l'obtention d'un film de bonnes résistances mécaniques.

## Revendications

1. Procédé de fabrication d'un film souple, solide, biodégradable, en particulier film pour conditionnement, emballage ou protection de surface ou de produit, caractérisé en ce que (a) on utilise une matière première végétale contenant de la moelle obtenue à partir d'une plante à moelle, (b) on met ladite matière première végétale en présence d'une solution basique de façon à en solubiliser les hémicelluloses, (c) on sépare la phase liquide de la phase solide, (d) on traite ladite phase liquide de façon à précipiter les hémicelluloses, (e) on extrait le précipité cristallisé obtenu, (f) on solubilise à chaud ledit précipité, (g) on étale la solution obtenue sur une surface en vue de former une couche liquide, et (h) on réalise un séchage de ladite couche en vue de former le film solide.

2. Procédé selon la revendication 1, caractérisé en ce que (a) on utilise comme matière première végétale la moelle extraite du sorgho, du kénaf ou des rafles de maïs, avec élimination des fibres lignocellulosiques externes.

3. Procédé selon la revendication 1, caractérisé en ce que (a) on utilise, comme matière première végétale, les tiges entières de sorgho ou de kénaf contenant la moelle ou les rafles entières de maïs, hors grains, contenant la moelle.

4. Procédé selon l'une des revendications 1, 2 ou 3, dans lequel (b) on met la matière première végétale en présence d'une solution de soude ou potasse, de concentration pondérale comprise entre 1 % et 10 %.

5. Procédé selon la revendication 4, dans lequel (b) la matière première végétale est mélangée à la solution basique dans un rapport pondéral solide/liquide au moins égal à 0,04.

6. Procédé selon l'une des revendications 4 ou 5, dans lequel (b) la solution contenant la matière végétale est chauffée, sous agitation, à une température comprise entre 40° C et 80° C.

7. Procédé selon l'une des revendications 1 à 6, caractérisé en ce que (d) on traite la phase liquide :
. (d₁) en précipitant sélectivement les hémicelluloses de type A,
. (d₂) en séparant ces hémicelluloses A de la phase liquide,
. puis (d₃) en précipitant les hémicelluloses de type B de la phase liquide, en vue d'extraire uniquement celles-ci.

8. Procédé selon la revendication 7, dans lequel :
. (d₁) on précipite sélectivement les hémicelluloses A par une addition d'acide jusqu'à un pH compris entre 5 et 7,
. (d₂) on élimine le précipité,
. puis (d₃) on ajoute à la phase liquide un alcool en quantité au moins égale à 20 g d'alcool par gramme d'hémicellulose B contenue dans la solution, en vue de précipiter lesdites hémicelluloses B.

9. Procédé selon la revendication 8, dans lequel (d0) on réalise une concentration préalable de la phase liquide par évaporation de façon à éliminer entre 30 % et 60 % d'eau.

10. Procédé selon l'une des revendications 1 à 9, dans lequel (f) on solubilise le précipité cristallisé dans un milieu aqueux porté à une température comprise entre 40° et 95° C, dans un rapport solide/liquide au moins égal à 100 g/l sans atteindre la saturation du milieu.

11. Film souple, solide, biodégradable, à base d'hémicellulose, réalisé par mise en oeuvre du procédé conforme à l'une des revendications 1 à 10, caractérisé par :
. un taux d'hydratation interne compris entre 10 % et 25 %,
. une solubilité à l'eau supérieure à 200 g/l,
. une résistance mécanique à la traction comprise entre 15 et 40 MPa.

12. Produit filmogène permettant la fabrication d'un film souple, solide, biodégradable, caractérisé en ce qu'il est majoritairement constitué par des hémicelluloses issues de moelle de sorgho, de kénaf ou de rafles de maïs.

13. Procédé de fabrication d'un produit filmogène conforme à la revendication 12, caractérisé en ce qu'il comprend les étapes suivantes : (a) on utilise une matière première végétale à base de sorgho, kénaf ou rafles de maïs, contenant de la moelle, (b) on met ladite matière première végétale en présence d'une solution basique de façon à en solubiliser les hémicelluloses, (c) on sépare la phase liquide de la phase solide, (d) on traite ladite phase liquide de façon à précipiter les hémicelluloses, (e) on extrait le précipité cristallisé obtenu, puis on sèche ledit précipité et on le conditionne en vue de son transport.
